# EUROPEAN PATENT APPLICATION

(11) **EP 2 389 027 A1**
(43) Date of publication of application: **23.11.2011**
(21) Application number: 10731214.2
(22) Date of filing: 08.01.2010
(51) Int. Cl.: H04W 16/14, H04W 56/00

(54) **MOBILE COMMUNICATION METHOD AND WIRELESS BASE STATIONS**

(30) Priority: 13.01.2009 JP 2009005099
(71) Applicant: NTT DOCOMO, INC., Chiyoda-ku Tokyo 100-6150 (JP)
(72) Inventor: IWAMURA, Mikio, Tokyo 100-6150 (JP)
(74) Representative: HOFFMANN EITLE
(86) International application number: PCT/JP2010/050167
(87) International publication number: WO 2010/082545

(57) **Abstract**

A mobile communication method according to the present invention includes the steps of: (A) measuring, at a mobile station (MUE) that is in communication in a first cell under the control of a first radio base station (MBS), a reception timing difference between a timing of receiving a downlink signal from the first cell and a timing of receiving a downlink signal from a second cell under the control of a second radio base station (FBS); (B) reporting, from the mobile station (MUE) to the first radio base station, the measured reception timing difference; and (C) transmitting, from the first radio base station (MBS) to the second radio base station (FBS), an adjustment instruction instructing to adjust a timing of transmitting a downlink signal in the second cell, based on the reception timing difference.

## Description

### TECHNICAL FIELD

The present invention relates to a mobile communication method and a radio base station.

### BACKGROUND ART

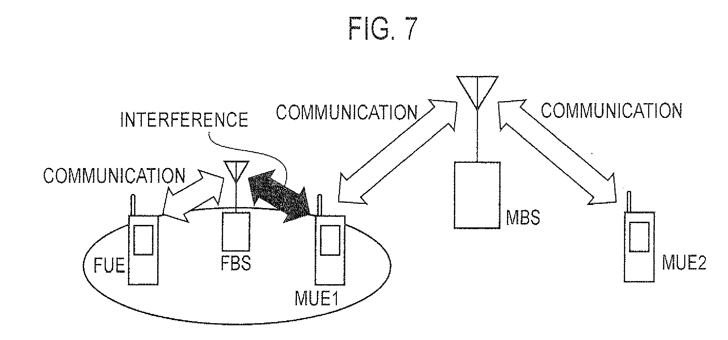

As illustrated in Fig. 7, it is considered to introduce an operation of a mobile communication system in which a macro radio base station MBS (Macro Base Station, also referred to as "eNodeB" or "eNB") and a femto radio base station FBS (Femto Base Station, also referred to as "HeNB" or "HNB") are mixed.

In this case, a mobile station that communicates with the macro radio base station MBS is referred to as "macro mobile station MUE (Macro User Equipment) " and a mobile station that communicates with the femto radio base station FBS is referred to as "femto mobile station FUE (Femto User Equipment)".

Further, a cell under the control of the femto radio base station FBS may also be referred to as "CSG (Closed Subscriber Group) cell". In the CSG cell, connection is permitted only to a specific mobile station belonging to the CSG. An example therefor is that the CSG is set to each family and only the family is permitted to connect to the CSG cell installed at their home. In the CSG cell, the mobile station to which the connection is permitted is limited to the CSG member. Given this fact, it can be easily imaged a case where a mobile station with no access right to the CSG cell is present in the vicinity of the CSG cell and a communication is performed by connecting to another cell, e.g. , a cell under the control of the macro radio base station MBS.

Thus, in an environment where the femto radio base station FBS and the macro radio base station MBS. are mixed, there is a case where the macro mobile station MUE exists within the coverage of the femto radio base station FBS.

### SUMMERY OF THE INVENTION

### PROBLEM TO BE SOLVED BY THE INVENTION

However, the above-described mobile communication system has a problem in that when the macro radio base station MBS and the femto radio base station FBS are operated in the same frequency band, it is probable that a significant quality deterioration or a capacity decrease occurs.

Particularly, when the macro mobile station MUE is present in the vicinity of the femto radio base station FBS, an interference between the macro mobile station MUE and the femto radio base station FBS poses a problem.

Particularly, when the macro mobile station MUE does not have the access right to the CSG cell under the control of the femto radio base station FBS and performs a notification in the immediate vicinity of the femto radio base station FBS, an interference between the macro mobile station MUE and the femto radio base station FBS is a serious problem.

In the example of Fig. 7, even in the case of the macro mobile stations MUE1 and MUE2 connecting to the same macro radio base station MBS, the interference between the macro mobile station MUE 2 and the femto radio base station FBS is not a serious problem because the distance between the two is large; however, the interference between the macro mobile station MUE1 and the femto radio base station FBS is a serious problem because the distance between the two is small.

For example, when the macro mobile station MUE1 transmits an uplink signal, if the femto mobile station FUE transmits an uplink signal at the same time by using the same radio resource, then the femto radio base station FBS experiences the interference from the macro mobile station MUE1 and thus it is probable that the uplink signal from the femto mobile station FUE cannot be correctly received.

Similarly, when the macro mobile station MUE1 receives a downlink signal from the macro radio base station MBS, if the femto radio base station FBS transmits a downlink signal to the femto mobile station FUE at the same time by using the same radio resource, then it is probable that the macro mobile station MUE1 cannot correctly receive a downlink signal from the macro radio base station MBS.

This circumstance prompts study on control to decrease the interference between the macro mobile station MUE1 and the femto radio base station FBS; however, such control is not possible when the downlink is not synchronized between the macro radio base station MBS and the femto radio base station FBS.

Therefore, the present invention is intended to overcome the above-described problem. An object of the present invention is to provide a mobile communication method and a radio base station, capable of synchronizing a downlink between a macro radio base station MBS (first radio base station) and a femto radio base station FBS (second radio base station).

### MEANS FOR SOLVING THE PROBLEM

A first aspect of the present invention is summarized as a mobile communication method, including the steps of: (A) measuring, at a mobile station that is in communication in a first cell under the control of a first radio base station, a reception timing difference between a timing of receiving a downlink signal from the first cell and a timing of receiving a downlink signal from a second cell under the control of a second radio base station; (B) reporting, from the mobile station to the first radio base station, the measured reception timing difference; and (C) transmitting, from the first radio base station to the second radio base station, an adjustment instruction instructing to adjust a timing of transmitting a downlink signal in the second cell, based on the reception timing difference.

A second aspect of the present invention is summarized as a radio base station that functions as a first radio base station in a mobile communication system in which the first radio base station and a second radio base station are mixed, including: a reception timing difference acquisition unit configured to acquire a reception timing difference between a timing of receiving a downlink signal from a first cell under the control of the first radio base station and a timing of receiving a downlink signal from a second cell under the control of the second radio base station, from a mobile station that is in communication in the first cell; and an adjustment instruction transmission unit configured to transmit an adjustment instruction instructing to adjust a timing of transmitting a downlink signal in the second cell, to the second radio base station based on the reception timing difference.

A third aspect of the present invention is summarized as a radio base station that functions as a second radio base station in a mobile communication system in which a first radio base station and the second radio base station are mixed, including: an adjustment instruction reception unit configured to receive an adjustment instruction instructing to adjust a timing of transmitting a downlink signal in a second cell under the control of the second radio base station, from the first radio base station; and a timing adjustment unit configured to adjust the timing of transmitting a downlink signal in the second cell, based on the received adjustment instruction in a state in which there is no mobile station that is in communication in the second cell.

A fourth aspect of the present invention is summarized as a radio base station that functions as a second radio base station in a mobile communication system in which a first radio base station and the second radio base station are mixed, including: an adjustment instruction reception unit configured to receive an adjustment instruction instructing to adjust a timing of transmitting a downlink signal in a second cell under the control of the second radio base station, from the first radio base station; and a timing adjustment unit configured to adjust the timing of transmitting a downlink signal in the second cell for each predetermined time based on the received adjustment instruction.

### EFFECT OF THE INVENTION

As described above, according to the present invention, it is possible to provide a mobile communication method and a radio base station, capable of synchronizing a downlink between a macro radio base station MBS (first radio base station) and a femto radio base station FBS (second radio base station).

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of a macro radio base station according to the first embodiment of the present invention.
[Fig. 3] Fig. 3 is a diagram explaining one example of broadcast information transmitted by a macro radio base station and a femto radio base station according to the first embodiment of the present invention.
[Fig. 4] Fig. 4 is a functional block diagram of a femto radio base station according to the first embodiment of the present invention.
[Fig. 5] Fig. 5 is a diagram explaining one example of a timing of transmitting broadcast information adjusted by the femto radio base station according to the first embodiment of the present invention.
[Fig. 6] Fig. 6 is a sequence chart showing an operation of a mobile communication system according to the first embodiment of the present invention.
[Fig. 7] Fig. 7 is a diagram explaining problems inherent in a conventional mobile communication system.

### BEST MODES FOR CURRYING OUT THE INVENTION

### (Configuration of mobile communication system according to first embodiment of the present invention)

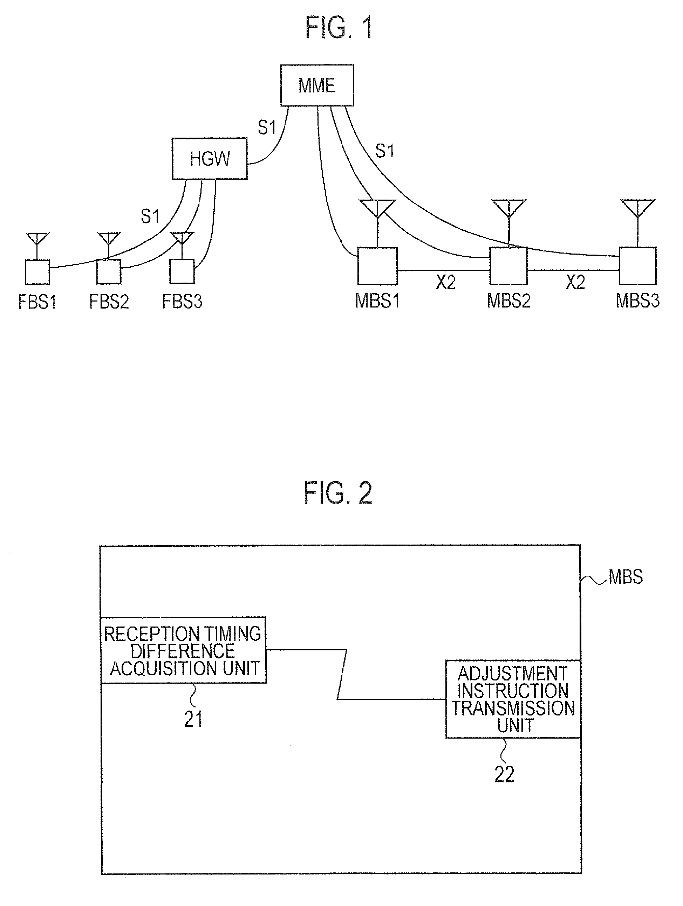

With reference to Fig. 1 to Fig. 5, the configuration of a mobile communication system according to a first embodiment of the present invention will be explained.

As illustrated in Fig. 1, the mobile communication system according to the present embodiment includes: macro radio base stations MBS1 to MBS3 (first radio base station); femto radio base stations FBS1 to FBS3 (first radio base station); a gateway apparatus HGW (Home eNB Gateway) that collectively controls the femto radio base stations FBS1 to FBS3; and a mobile switching center MME (Mobility Management Equipment) that collectively controls the macro radio base stations MES1 to MBS3 and that is connected to the gateway apparatus HGW.

The femto radio base stations FBS1 to FBS3 and the gateway apparatus HGW are connected by an S1 interface, the gateway apparatus HGW and the mobile switching center MME are connected by an S1 interface, the macro radio base stations MBS1 to MBS3 and the mobile switching center MME are connected by an S1 interface, and the macro radio base stations MBS1 to MBS3 are connected with each other by an X2 interface.

In this case, the femto radio base stations FBS1 to FBS3 may be connected with each other by an X2 interface. Further, the femto radio base stations FBS1 to FBS3 and the mobile switching center MME may be connected by the S1 interface without the gateway apparatus HGW therebetween.

Hereinafter, with reference to Fig. 2, the configuration of the macro radio base stations MBS1 to MBS3 will be explained. In this case, the macro radio base stations MBS1 to MBS3 are basically the same in configuration, and are explained collectively as a macro radio base station MBS.

As illustrated in Fig. 2, the macro radio base station MBS includes a reception timing difference acquisition unit 21 and an adjustment instruction transmission unit 22.

The reception timing difference acquisition unit 21 is configured to acquire a reception timing difference between a timing of receiving a downlink signal from a macro cell (a first cell) under the control of the macro radio base station MBS and a timing of receiving a downlink signal from a femto cell (a second cell) under the control of a femto radio base station FBS, from a macro mobile station MUE that is in communication in the macro cell.

Specifically, the reception timing difference acquisition unit 21 maybe conf igured to acquire the reception timing difference included in a measurement report received from the macro mobile station MUE.

For example, the macro mobile station MUE receives MIB (Master Information Block) constituting broadcast information transmitted in the above-mentioned macro cell and femto cell, and acquires SFN (System Frame Number) included in the MIB.

Then, the macro mobile station MUE may be configured to calculate the above-mentioned reception timing difference with reference to the SFN included in the MIB from the above-mentioned macro cell and the SFN included in the MIB from the above-mentioned femto cell.

In addition, the reception timing difference may be defined by time or the number of sub-frames.

Furthermore, the macro mobile station MUE may be configured to calculate the above-mentioned reception timing difference with reference to RS (Reference Signal) transmitted in the above-mentioned macro cell and femto cell.

Furthermore, the macro mobile station MUE may be configured to simultaneously report the reception quality of the RSs (Reference Signals), which have been transmitted in the above-mentioned macro cell and femto cell, to the macro radio base station MBS. The reception quality may include RSRP (Reference Signal Received Power) or RSRP (Reference Signal Received Quality), an SIR and the like. For example, a measurement report with the following format may be transmitted.

· serving cell RSRP
· serving cell RSRQ
· femto radio base station 1 identifier
· femto radio base station 1 RSRP
· femto radio base station 1 reception timing difference
· femto radio base station 2 identifier
· femto radio base station 2 RSRP
· femto radio base station 2 reception timing difference
···
Here, the serving cell indicates a cell under the control of the macro radio base station MBS with which the macro mobile station MUE is communicating.

Furthermore, the macro radio base station MBS may be configured to determine the credibility of the reception timing difference simultaneously reported from the macro mobile station MUE, based on the reception quality of the above-mentioned measurement report transmitted by the macro mobile station MUE.

That is, when both the reception quality of a downlink signal in the macro cell under the control of the macro radio base station MBS and the reception quality of a downlink signal in the femto cell under the control of the femto radio base station FBS, which have been reported from the macro mobile station MUE, are equal to or more than a predetermined threshold value, the macro radio base station MBS may determine the reported reception timing difference as a result measured with high accuracy.

Then, the reception timing difference acquisition unit 21 may be configured to acquire the reception timing difference, based only on the result determined to be measured with high accuracy. Furthermore, the reception timing difference may be acquired based on an average value of a plurality of measurement reports from the macro mobile station MUE.

In addition, only when the reception quality (e.g., the RSRP) of the downlink signal in the femto cell under the control of the femto radio base station FBS is equal to or more than the predetermined threshold value, the macro radio base station MBS may control the macro mobile station MUE to transmit the above-mentioned measurement report.

Moreover, the macro radio base station MBS may be configured to transmit the reception quality (e.g., the RSRP) of the downlink signal in the femto cell under the control of the femto radio base station FBS, which has been reported from the macro mobile station MUE, and a timing difference adjustment command to the femto radio base station FBS at the same time. Furthermore, the reception quality may be set based on the average value of the plurality of measurement reports from the macro mobile station MUE.

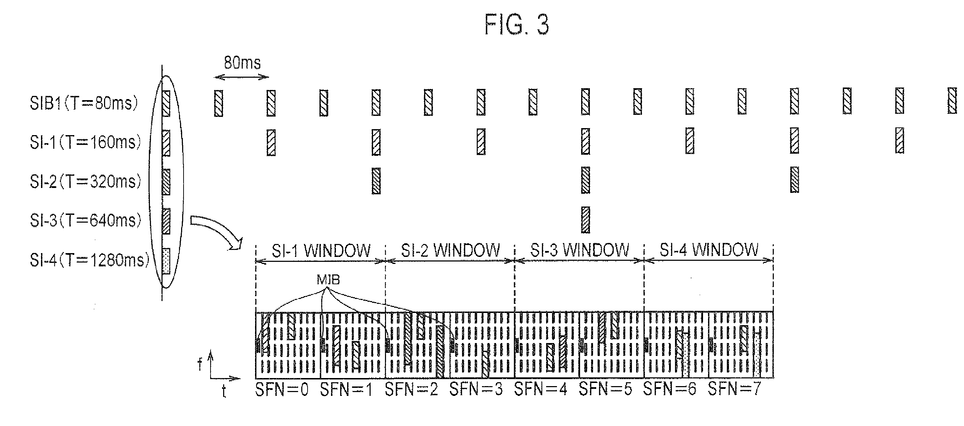

Fig. 3 illustrates one example of the broadcast information transmitted by the macro radio base station MBS and the femto radio base station FBS.

In an example of Fig. 3, in addition to the above-described MIB, SIB1 (System Information Block 1) transmitted in a period of 80 ms and SI-1 (System Information-1) to SI-4 are included in the broadcast information. The SI-1 to SI-4 are configured to be transmitted within an SI-1 window to an SI-4 window, respectively.

The adjustment instruction transmission unit 22 is configured to transmit an adjustment instruction instructing to adjust the timing of transmitting a downlink signal in the macro cell, to the femto radio base station FBS based on the reception timing difference acquired by the reception timing difference acquisition unit 21.

Here, the adjustment instruction includes information (e.g., time, the number of sub-frames, and the like) used for the above-mentioned adjustment by the femto radio base station FBS.

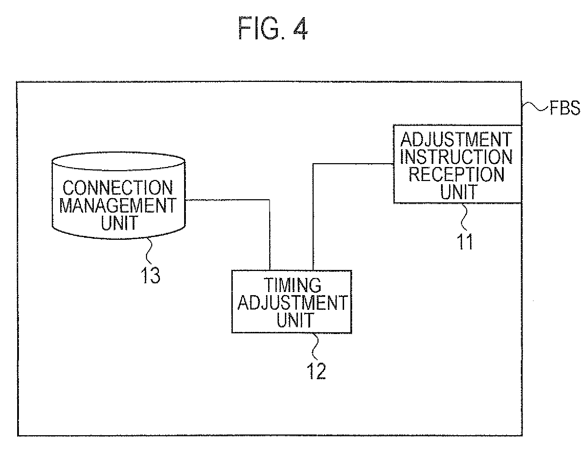

Hereinafter, with reference to Fig. 4, the configurations of the femto radio base stations FBS1 to FBS3 will be explained. In this case, the femto radio base stations FBS1 to FBS3 are basically the same in configuration, and are explained collectively as the femto radio base station FBS, below.

The femto radio base stations FBS includes an adjustment instruction reception unit 11, a timing adjustment unit 12, and a connection management unit 13.

The adjustment instruction reception unit 11 is configured to receive an adjustment instruction instructing to adjust the timing of transmitting a downlink signal in the femto cell under the control of the femto radio base station FBS, from the macro radio base station MBS.

The connection management unit 13 is configured to manage a connection established with the femto radio base stations FBS that is in communication in the femto cell.

The timing adjustment unit 12 is configured to adjust the timing of transmitting a downlink signal in the femto cell based on the received adjustment instruction, that is, using the information (e.g., time, the number of sub-frames, and the like) included in the received adjustment instruction.

Specifically, the timing adjustment unit 12 may be configured to adjust the timing of transmitting a downlink signal in the femto cell based on the received adjustment instruction in the state in which there is no femto mobile station FUE that is in communication in the femto cell.

Here, the timing adjustment unit 12 is configured to determine the presence or absence of the femto mobile station FUE that is in communication in the femto cell with reference to the connection management unit 13.

Furthermore, the timing adjustment unit 12 may be configured to adjust the timing of transmitting a downlink signal in the femto cell for each predetermined time based on the received adjustment instruction.

Here, the timing adjustment unit 12 may be configured to adjust the timing of transmitting a downlink signal in the femto cell for each predetermined time regardless of the presence or absence of the femto mobile station FUE that is in communication in the femto cell.

In addition, the predetermined time may be shorter than a time defined by the "cyclic prefix", a time itself, or the number of sub-frames. Here, the predetermined time may be included in the above-mentioned adjustment instruction.

Thus, the adjustment of the transmission timing by each small amount within a predetermined time will be beneficial to maintain a downlink synchronization of the femto mobile station FUE. That is, the timing adjustment unit 12 adjusts the timing of transmitting the femto cell little by little in the range in which the femto cell mobile station FUE can continuously maintain the downlink synchronization.

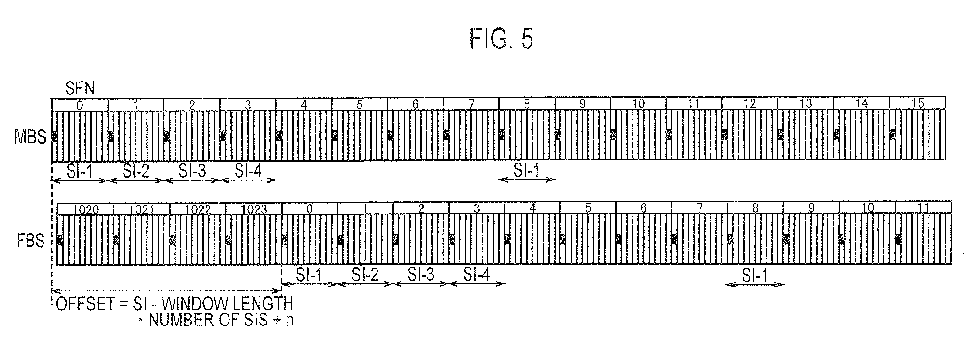

For example, as illustrated in Fig. 5, the timing adjustment unit 12 may adjust to deviate the position of a sub-frame with "SFN = 0" and the "sub-frame number = 0" of a downlink in the femto cell, by "SI window length" × "number of SIs" + "n (the number of sub-frames included in the received adjustment instruction) ", from a position of a sub-frama with "SFN = 0" and the "sub-frame number = 0" of a downlink in the above-mentioned macro cell.

In this case, the SI-1 window length to SI-1 window length are the same (SI window length). Further, "SI window length" and "number of Sis" are included in SIB1.

Furthermore, the timing adjustment unit 12 may be configured to periodically adjust the timing of transmitting of a downlink signal in the femto cell, to adjust the timing of transmitting a downlink signal in the femto cell when the femto radio base station FBS starts to operate, or to adjust the timing of transmitting of a downlink signal in the femto cell whenever the adjustment instruction is received.

In addition, the femto radio base station FBS may be configured to not transmit a downlink signal in the femto cell, while the timing adjustment unit 12 is performing the above-mentioned adjustment.

In addition, when commands giving instructions for the adjustment of the timing of transmitting a downlink signal in the femto cell are received from a plurality of macro radio base stations MBS, the timing adjustment unit 12 may adjust the transmission timing based on the reception quality (e.g. , the RSRP) of a downlink signal in the femto cell, which has been notified from the macro radio base stations MBS together with the commands.

That is, for example, the timing adjustment unit 12 may adjust the transmission timing according to a command from a macro radio base station MBS having reported the highest quality as the reception quality of a downlink signal in the femto cell.

Otherwise, the timing adjustment unit 12 may adjust the transmission timing based on an average value of the commands from the plurality of macro radio base stations MBS.

### (Operation of the mobile communication system according to the first embodiment of the present invention)

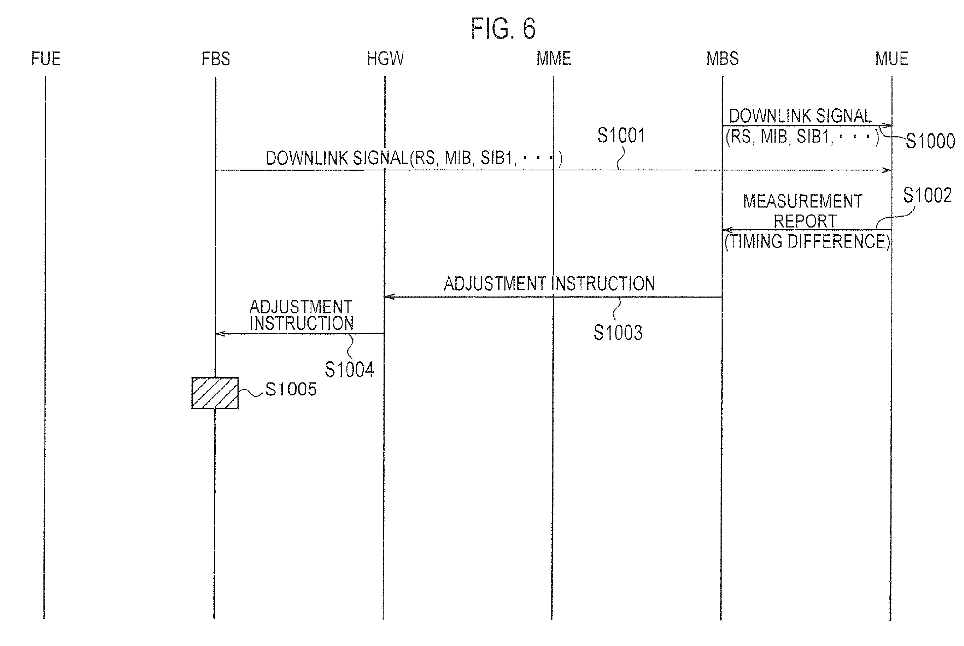

With reference to Fig. 6, the operation of the mobile communication system according to the first embodiment of the present invention will be explained.

As shown in Fig. 6, the macro mobile station MUE that is in communication in the macro cell under the control of the macro radio base station MBS receives a downlink signal (e.g., RS, MIB, and SIB1) transmitted in the macro cell in step S1000, and receives a downlink signal (e.g., RS, MIB, and SIB1) transmitted in the femto cell under the control of the femto radio base station FBS in step S1001.

In step S1002, the macro mobile station MUE calculates the reception timing difference (e.g., time or the number of sub-frames) between the timing of receiving a downlink signal transmitted in the macro cell under the control of the macro radio base station MBS and the timing of receiving a downlink signal transmitted in the femto cell under the control of the femto radio base station FBS, and transmits a measurement report including the calculated reception timing difference to the macro radio base station MBS.

Here, each time calculating the reception timing difference, the macro mobile station MUE may transmit the measurement report, or transmit the measurement report including the reception timing difference at a normal timing of transmitting a measurement report.

In steps S1003 and S1004, the macro radio base station MBS acquires the above-mentioned reception timing difference from the received measurement report, and transmits an adjustment instruction generated based on the acquired reception timing difference to the femto radio base station FBS via the gateway apparatus HGW.

In step S1005, the femto radio base station FBS adjusts the timing of transmitting a downlink signal in the femto cell, based on the received adjustment instruction, that is, using information (e.g., time or the number of sub-frames) included in the received adjustment instruction.

### (Operation and effect of the mobile communication system according to the first embodiment of the present invention)

In accordance with the mobile communication system according to the first embodiment of the present invention, the femto radio base station FBS can adjust the timing (i.e., the position of a sub-frame of the downlink) of transmitting a downlink signal based on the information included in the adjustment instruction acquired from the macro radio base station MBS, so that it is possible to achieve downlink synchronization between the macro radio base station MBS (a first radio base station) and the femto radio base station FBS (a second radio base station).

Furthermore, in accordance with the mobile communication system according to the first embodiment of the present invention, the femto radio base station FBS adjusts to deviate the position of the sub-frame with the "SFN = 0" and the "sub-frame number = 0" of the downlink in the femto cell from the position of the sub-frame with the "SFN = 0" and the "sub-frame number = 0" of the downlink in the above-mentioned macro cell by the "SI window length" × the "number of SIs" + the "n", so that it is possible to reduce the probability that SI windows of the downlink will overlap between the macro cell and the femto cell and to easily avoid the mutual interference between SIs.

Further, according to the mobile communication system based on the first embodiment of the present invention, the femto radio base station FBS adjusts the above-described "n" so as to deviate the position of the sub-frame of "SFN = 0" and "sub-frame number = 0" so that the timings of transmitting MIB do not overlap between the macro cell and the femto cell, and as a result, it is possible to easily avert the mutual interference of MIB.

Meanwhile, in accordance with the mobile communication system according to the first embodiment of the present invention, the head positions of sub-frames are aligned between the macro cell and the femto cell, that is, synchronization is made in sub-frame units, so that it is easy to control the assignment of a radio resource such as a PDSCH (Physical Downlink Shared Channel), a PDCCH (Physical Downlink Control Channel), a PUSCH (Physical Uplink Shared Channel) or a PUCCH (Physical Uplink Control Channel).

The above-mentioned aspect of the embodiment may be expressed as follows:

A first aspect of the present embodiment is summarized as a mobile communication method, including the steps of: (A) measuring, at a macro mobile station MUE that is in communication with a macro radio base station MBS (a first radio base station), a reception timing difference between the timing of receiving a downlink signal from a macro cell (a first cell) under the control of the macro radio base station MBS and the timing of receiving a downlink signal from a femto cell (a second cell) under the control of a femto radio base station FBS (a second radio base station); (B) reporting, from the macro mobile station MUE to the macro radio base station MBS, the measured reception timing difference; and (C) transmitting, from the macro radio base station MBS to the femto radio base station FBS, an adjustment instruction instructing to adjust a timing of transmitting a downlink signal in the femto cell, based on the reception timing difference.

In the first aspect of the present embodiment, the mobile communication method may further include: a step (D) of adjusting, at the femto radio base station FBS, the timing of transmitting a downlink signal in the femto cell based on the adjustment instruction.

In the first aspect of the present embodiment, in the step (D), the femto radio base station FBS may adjust the timing of transmitting a downlink signal in the femto cell in the state in which there is no femto mobile station FUE that is in communication in the second cell.

In the first aspect of the present embodiment, in the step (D), the femto radio base station FBS may adjust the timing of transmitting a downlink signal in the femto cell for each predetermined time.

In the first aspect of the present embodiment, in the step (B), the macro mobile station MUE may transmit a measurement report including the reception timing difference.

In the first aspect of the present embodiment, in the step (B), the macro mobile station MUE may transmit a measurement report including the reception quality (e.g., RSRP or RSRQ) of the downlink signal in the macro cell and the femto cell.

In the first aspect of the present embodiment, the mobile communication method may further include a step (E) of instructing, from the macro radio base station MBS to the macro mobile station MUE, to report the measurement report when the reception quality (e.g. , RSRP or RSRQ) of a downlink signal in the femto cell is equal to or more than a predetermined threshold value.

A second aspect of the present embodiment is summarizes as a radio base station serving as a macro radio base station MBS in a mobile communication system in which the macro radio base station MBS and a femto radio base station FBS are mixed, includes: the reception timing difference acquisition unit 21 configured to acquire a reception timing difference between a timing of receiving a downlink signal from a macro cell and a timing of receiving a downlink signal from a femto cell under the control of the femto radio base station FBS, from a macro mobile station MUE that is in communication in the macro cell under the control of the macro radio base station MBS, and the adjustment instruction transmission unit 22 configured to transmit, to the femto radio base station FBS, an adjustment instruction instructing to adjust the timing of transmitting a downlink signal in the femto cell, based on the reception timing difference.

In the second aspect of the present embodiment, the reception timing difference acquisition unit 21 may be configured to acquire a reception timing difference included in a measurement report received from the macro mobile station MUE that is in communication in the macro cell.

A third aspect of the present embodiment is summarizes as a radio base station serving as a femto radio base station FBS in a mobile communication system in which a macro radio base station MBS and the femto radio base station FBS are mixed, includes: the adjustment instruction reception unit 11 configured to receive an adjustment instruction instructing to adjust a timing of transmitting a downlink signal in a femto cell under the control of the femto radio base station FBS, from the macro radio base station MBS, and the timing adjustment unit 12 configured to adjust a timing of transmitting a downlink signal in the femto cell based on the received adjustment instruction in the state in which there is no femto mobile station FUE that is in communication in the femto cell.

A fourth aspect of the present embodiment is summarized as a radio base station serving as a femto radio base station FBS in a mobile communication system in which a macro radio base station MBS and the femto radio base station FBS are mixed, includes the adjustment instruction reception unit 11 configured to receive an adjustment instruction instructing to adjust a timing of transmitting of a downlink signal in a femto cell under the control of the femto radio base station FBS, from the macro radio base station MBS, and the timing adjustment unit 12 configured to adjust a timing of transmitting a downlink signal in the femto cell for each predetermined time based on the received adjustment instruction.

The operation of the above-described macro radio base station MBS, the femto radio base station FBS, the macro mobile station MUE, the femto mobile station FUE, the mobile switching center MME and the gateway apparatus HGW may be implemented by a hardware, may also be implemented by a software module executed by a processor, and may further be implemented by the combination of the both.

The software module may be arranged in a storing medium of an arbitrary format such as RAM(Random Access Memory), a flash memory, ROM(Read Only Memory), ERROM (Erasable Programmable ROM), EEPROM (Electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIC may be arranged in the macro radio base station MBS, the femto radio base station FBS, the macro mobile station MUE, the femto mobile station FUE, the mobile switching center MME and the gateway apparatus HGW. As a discrete component, such a storing medium and processor may be arranged in the macro radio base station MBS, the femto radio base station FBS, the macro mobile station MUE, the femto mobile station FUE, the mobile switching center MME and the gateway apparatus HGW.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

## Claims

1. A mobile communication method, comprising the steps of:
(A) measuring, at a mobile station that is in communication in a first cell under the control of a first radio base station, a reception timing difference between a timing of receiving a downlink signal from the first cell and a timing of receiving a downlink signal from a second cell under the control of a second radio base station;
(B) reporting, from the mobile station to the first radio base station, the measured reception timing difference; and
(C) transmitting, from the first radio base station to the second radio base station, an adjustment instruction instructing to adjust a timing of transmitting a downlink signal in the second cell, based on the reception timing difference.

2. The mobile communication method according to claim 1, further comprising:
a step (D) of adjusting, at the second radio base station, the timing of transmitting a downlink signal in the second cell based on the adjustment instruction.

3. The mobile communication method according to claim 2, wherein
in the step (D), the second radio base station adjusts the timing of transmitting a downlink signal in the second cell in a state in which there is no mobile station that is in communication in the second cell.

4. The mobile communication method according to claim 2, wherein
in the step (D), the second radio base station adjusts the timing of transmitting a downlink signal in the second cell for each predetermined time.

5. The mobile communication method according to claim 1, wherein
in the step (B), the mobile station transmits a measurement report including the reception timing difference.

6. The mobile communication method according to claim 1, wherein
in the step (B), the mobile station transmits a measurement report including reception quality of a downlink signals in the first cell and the second cell.

7. The mobile communication method according to claim 5 or 6, further comprising:
a step (E) of instructing, from the first radio base station to report the measurement report, when the reception quality of a downlink signal in the second cell is equal to or more than a predetermined threshold value.

8. A radio base station that functions as a first radio base station in a mobile communication system in which the first radio base station and a second radio base station are mixed, comprising:
a reception timing difference acquisition unit configured to acquire a reception timing difference between a timing of receiving a downlink signal from a first cell under the control of the first radio base station and a timing of receiving a downlink signal from the second cell, from a mobile station that is in communication in the first cell under the control of the first radio base station; and
an adjustment instruction transmission unit configured to transmit an adjustment instruction instructing to adjust a timing of transmitting a downlink signal in the second cell, to the second radio base station based on the reception timing difference.

9. The radio base station according to claim 8, wherein
the reception timing difference acquisition unit is configured to acquire the reception timing difference included in a measurement report received from the mobile station that is in communication in the first cell.

10. A radio base station that functions as a second radio base station in a mobile communication system in which a first radio base station and the second radio base station are mixed, comprising:
an adjustment instruction reception unit configured to receive an adjustment instruction instructing to adjust a timing of transmitting a downlink signal in a second cell under the control of the second radio base station, from the first radio base station; and
a timing adjustment unit configured to adjust the timing of transmitting a downlink signal in the second cell, based on the received adjustment instruction in a state in which there is no mobile station that is in communication in the second cell.

11. A radio base station that functions as a second radio base station in a mobile communication system in which a first radio base station and the second radio base station are mixed, comprising:
an adjustment instruction reception unit configured to receive an adjustment instruction instructing to adjust a timing of transmitting a downlink signal in a second cell under the control of the second radio base station, from the first radio base station; and
a timing adjustment unit configured to adjust the timing of transmitting a downlink signal in the second cell for each predetermined time based on the received adjustment instruction.
